(19) Europäisches Patentamt / European Patent Office / Office européen des brevets

(11) **EP 1 980 958 A2**

(12) **EUROPEAN PATENT APPLICATION**

(43) Date of publication:
**15.10.2008 Bulletin 2008/42**

(51) Int Cl.:
***G06F 17/30*** *(2006.01)*

(21) Application number: **08007229.1**

(22) Date of filing: **11.04.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(30) Priority: **13.04.2007 US 911756 P**<br>**08.04.2008 US 99531** | (71) Applicant: **Nero AG**<br>**76307 Karlsbad (DE)**<br><br>(72) Inventor: **Hornberger, Arno**<br>**76676 Graben-Neudorf (DE)**<br><br>(74) Representative: **Zinkler, Franz et al**<br>**Schoppe, Zimmermann, Stöckeler & Zinkler**<br>**Patentanwälte**<br>**Postfach 246**<br>**82043 Pullach bei München (DE)** |

(54) **Apparatus and method for generating a data file or for reading a data file**

(57)    An apparatus for generating a data file has a navigation information generator and a file constructor. The file constructor constructs a file having a metadata container and a media data container. The metadata container comprises information indicating presentation times for a plurality of media samples, and the media data container includes these media samples. Additionally, the file constructor inserts redundant navigation information records into the media data container. A reader calculates presentation times of media samples based on these navigation information records in the media data container.

FIG 1

**Description**

Field of the invention

The present invention relates to processing and using data files having a container structure and, in particular, to data files having a metadata container and a media data container, the media data having audio and/or video data.

Background of the Invention and Prior Art

The distribution of data files via the Internet from data servers to personal computers has found wide spread acceptance. This downloading of files requires a certain file structure. Among different file structures, the MPEG-4 file structure is becoming more and more popular. In accordance with the MPEG-4 standard (ISO/IEC 14496-1) a file format (MP4-file format) is provided, which contains the media information of an ISO/IEC 14496 presentation in a flexible, extendible format that facilitates interchange, management, editing, and presentation of the media. This presentation may be "local" to the system containing the presentation, or may be via a network or other stream delivery mechanisms (a streaming protocol).

There exist other container-like file formats such as Apple QuickTime files or other formats, which have a separation of metadata on the one hand and media data on the other hand. A typical characteristic of such container-like files is that the media samples, i.e., video frames or audio frames or, generally stated, access units are written in the media data container in a "chunked" way. This means that one media sample is written after the other without any intervening overhead information. This allows the MPEG-4 file to become compact. On the other hand, the metadata container includes the necessary information for finding the start of each media sample in the media data container.

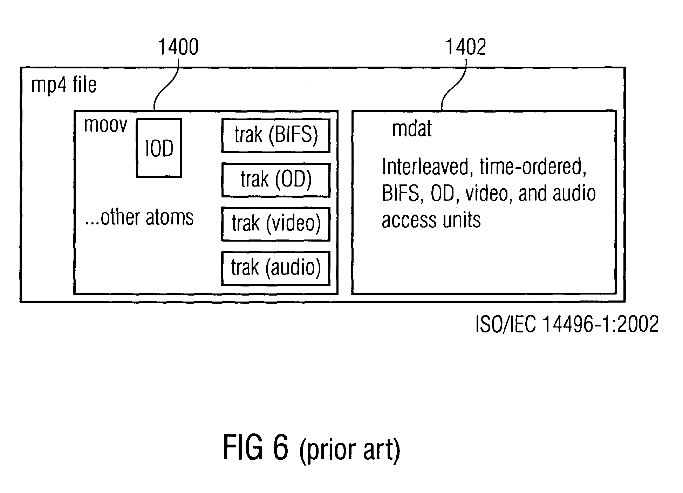

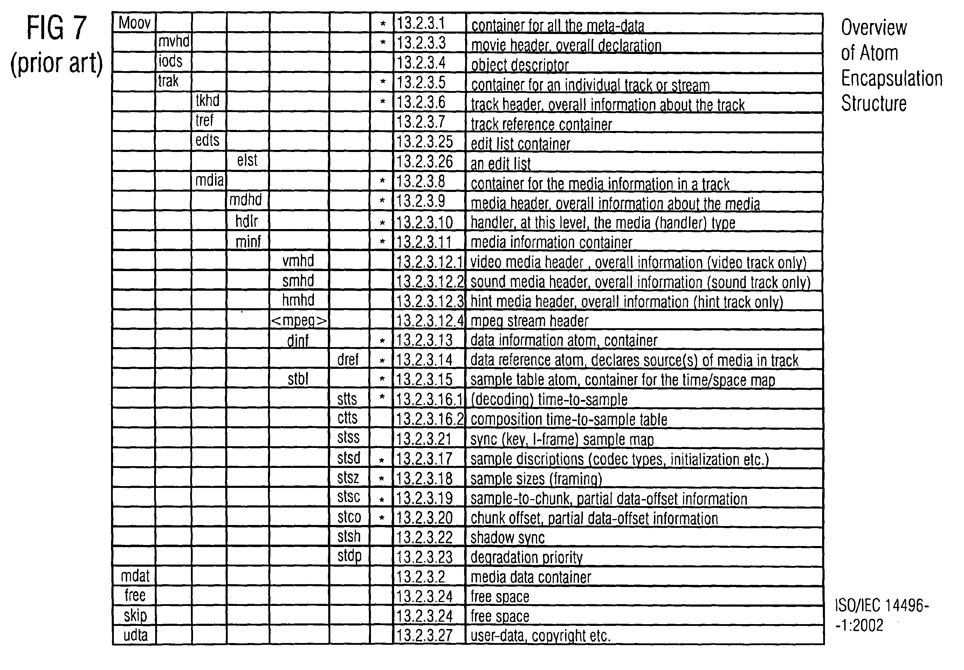

Fig. 6 and the subsequent Figs. 7, 8, 9, 10, 11, 12 have been taken out from ISO/IEC 14496-1:2002 and provide information on the MP4-file format. Generally, an MP4-file includes several atoms. The main atoms in a file are the MOOV atom and the MDAT atom. The MOOV atom is indicated as 1400 in Fig. 6, and the MDAT atom is indicated at 1402 in Fig. 6. The MOOV atom 1400 can include, in a certain hierarchical order, several further atoms, which are shown in the table of Fig. 7 giving an overview of the atom encapsulation structure of the MPEG-4 standard. For the purpose of this specification, an MP4 MOOV atom 1400 would correspond to a metadata container, and an MDAT atom 1402 would correspond to a media data container. Furthermore, the video and audio access units as mentioned in Fig. 6 would correspond to media samples.

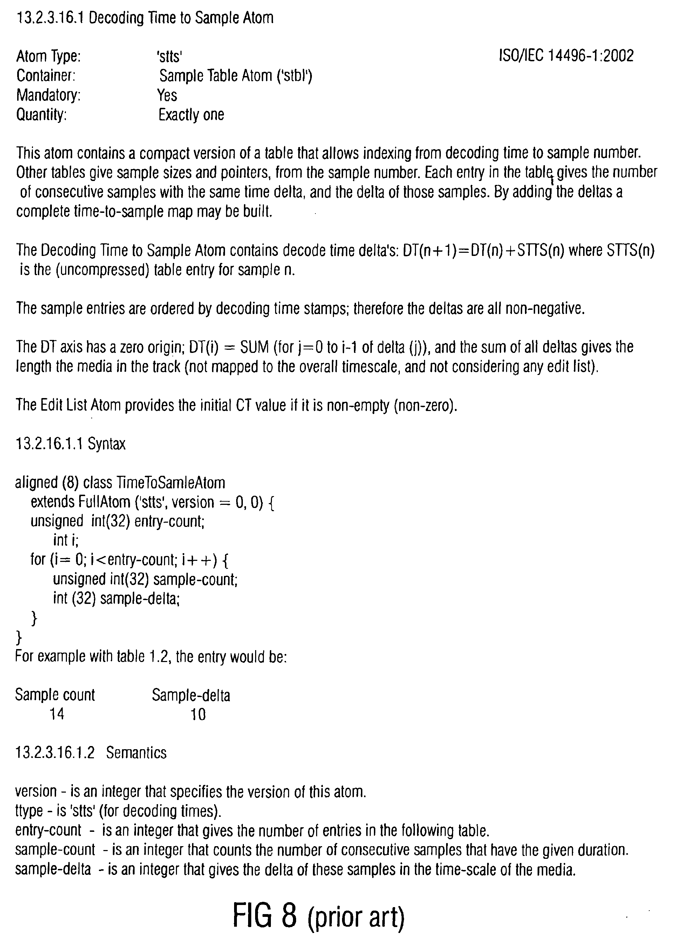

The metadata atom MOOV 1400 includes several information atoms, wherein some of these atoms are subsequently described with respect to Figs. 8 to 12. As indicated in Fig. 8, the STTS atom, which is also called decoding time to sample atom contains a compact version of a table that allows indexing from decoding time to the sample number. Specifically, the decoding time to sample atom includes time deltas which means that in order to find an absolute decoding time of a particular sample, one has to add up all preceding decode time deltas and the actual decode time delta for the current sample.

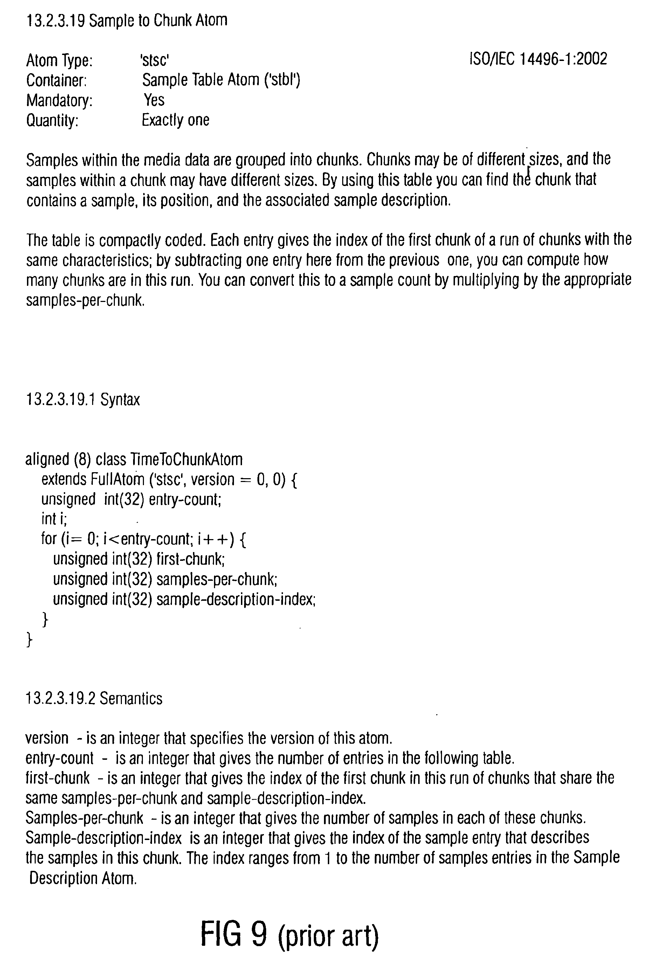

Fig. 9 gives more information on the sample to chunk atom which is also called "STSC atom". Generally, samples within a media data are grouped into chunks. Chunks may be of different sizes and can, in general, include one ore more media samples. Additionally, samples within a chunk may have different sizes. The sample to chunk atom provides information to all samples within a chunk or "run of samples".

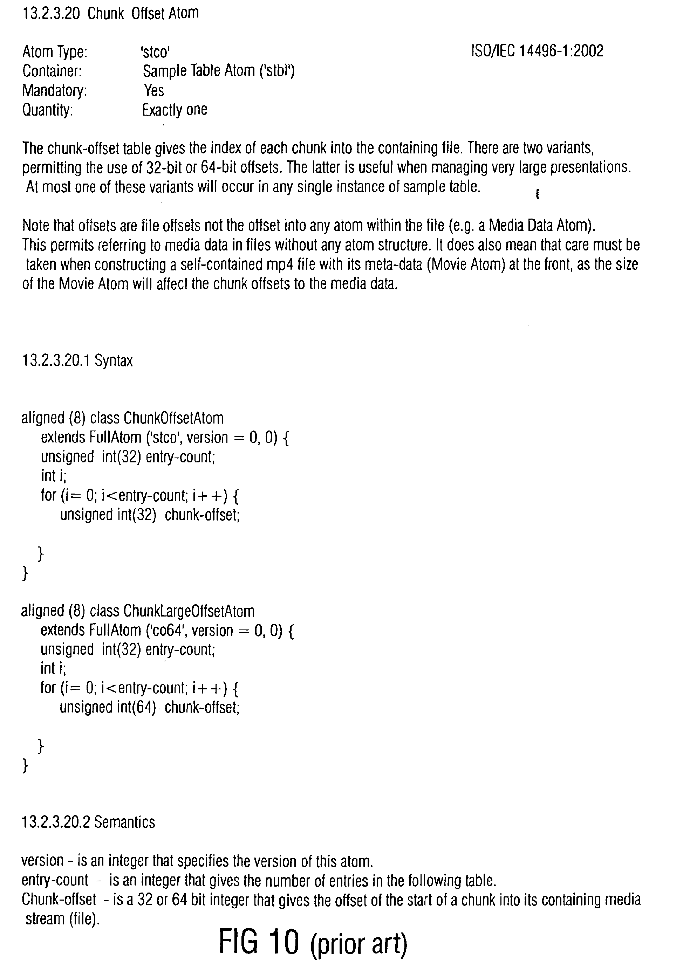

Fig. 10 illustrates more information on the chunk offset atom (STCO). The chunk offset table gives the index of each chunk into the containing file. This means that, when one wishes to access a certain chunk, one can retrieve the start information of this chunk within an MP4-file by accessing the sample table atom entry for the specific chunk. The chunk offset value provides, for example, an indication of the first byte of a specific chunk in bytes counted, for example, from the first byte of an MP4-file.

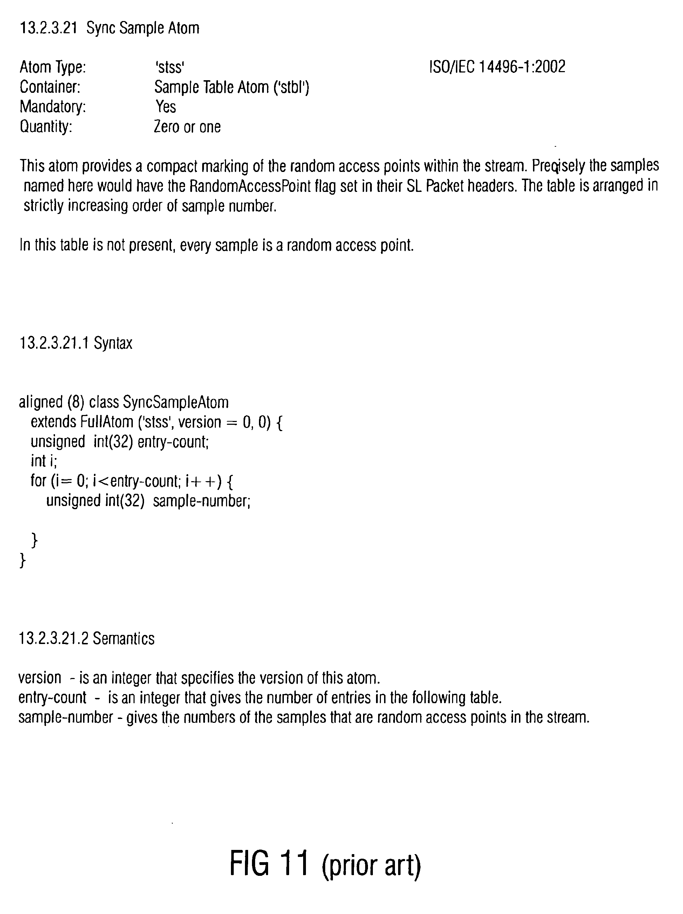

Fig. 11 illustrates a sync sample atom or "STSS" atom, which provides a compact marking of random access points within a stream. As it is known, for example, from video coding, specific video coding algorithms are applied which rely on inter-frame prediction. Specifically, video frames are encoded by generating groups of pictures, where each group of picture has a first I-frame, i.e., an intra frame, which is self-contained in that one can access this frame and decode this frame without information from other frames. Such an intra frame will be a random access point or a keyframe. This intra frame is followed by several prediction frames, which are known as P-frames for a one-directional prediction or B-frames for a bi-directional prediction. One cannot directly access an B-frame or P-frame due to the fact that this frame is not self-contained but relies on information from its corresponding intra frame from the group of pictures considered.

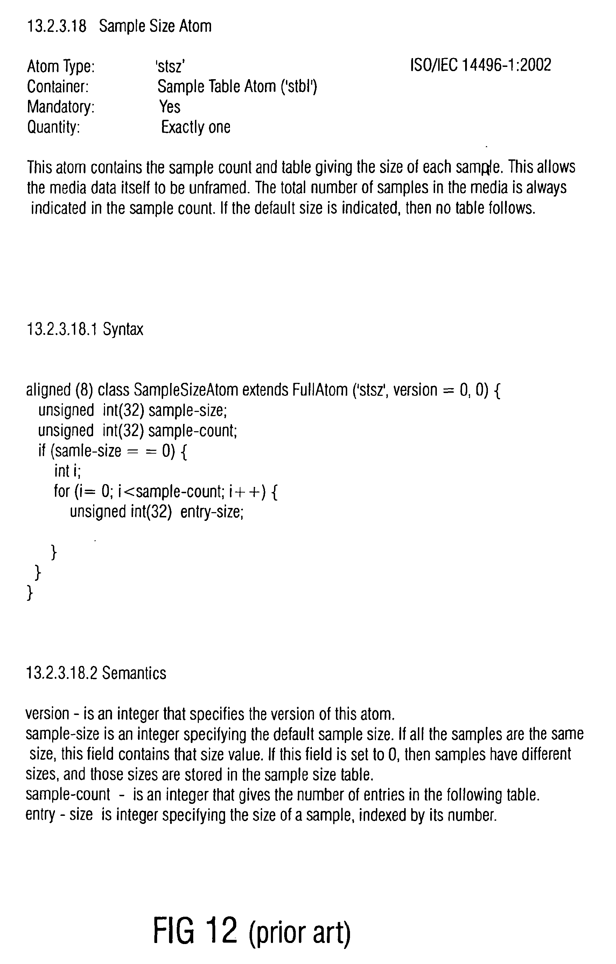

Fig. 12 illustrates information on the sample size atom (STSZ). This atom contains the sample count and a table given the size of each sample. Therefore, together with the sample to chunk atom of Fig. 9, one can find the start of each sample within each chunk based on the sample size atom.

For processing an MP4-file, a file reader normally reads the complete metadata container before starting decoding and rendering of the sample data included in the media data container. This requires considerable memory resources of the file reader due to the fact that several atoms which are included in the sample table atom (STBL) in Fig. 7 corresponding to section 13.2.3.15 of the MPEG-4 standard require a considerable amount of storage space due to their considerable size. This is particularly true for the STTS atom, the CTTS atom, the STSZ atom, and the STCO atom.

Specifically, due to the relative time information included in the STTS atom which, of course, results in a quite compact table, a file reader has to store the complete table even though a user is, for example, only interested in some media samples rather than all media samples in the media data container.

The MP4 container is, as outlined above, a table-based format. As opposed to streaming containers like MPEG-program streams or transport streams, where decoding can be started from within arbitrary points in a byte stream, MP4 tables from the metadata container include essential meta information such as timing information, compressed sample sizes etc. This information about the media-content is stored at a centralized place in the MP4-file, which is the movie resource or the MOOV-box in the syntax of MP4, or generally, the metadata container.

For playback and random navigation in the MP4-file, usually the complete movie resource needs to be loaded into the memory to allow the playback and navigation logic to properly perform its tasks.

For a full length movie, the size of the movie resource can quickly grow big, and 4 to 6 Mbytes are not unusual values. This is normally no problem for personal computer playback applications.

Problems, however, arise, when MP4-files are to be rendered in smaller consumer electronic devices. These consumer electronic devices are, for example, portable players, mobile phones, navigation systems or any other wireless devices, which are provided with a speaker output or a display and some computational resources for rendering audio and/or video data. Thus, not only detected audio or video players but also other devices such as mobile phones or other small-scale and in most instances small-priced consumer electronic devices are more and more required to have an additional value by rendering audio and/or video data.

However, although such devices have an increasing amount of hard disc or NVM (none volatile memory) storage, the amount of working memory for the processor itself is nevertheless limited. Thus, for such smaller consumer electronic devices, it is not feasible to keep such 4 to 6 Mbytes of data in their processor working memory which is heavily restricted compared to ample processor memory resources known from personal computers.

Summary of the Invention

In accordance with the present invention, this problem is solved by providing a way for electronic devices with limited working memory resources, so that even those devices can read and process data files being structured in metadata and media data containers. In accordance with the present invention, redundant navigation information records indicating a presentation time of a media sample are written into the media sample container in addition to the regular presentation time information included in the metadata container. Thus, the presentation information is redundantly stored in the data file. This redundancy leads to a modest increase of the complete file size. However, this modest increase of the file size is awarded by a huge reduction of memory resources required by consumer electronic devices such as mobile phones, mobile players etc., which are now in the position to render an inventively processed data file with significantly reduced working memory requirements.

Hence the present invention makes it possible to distribute MP4-files not only to personal computers having high processing resources but to distribute container-structured file such as MP4-files also to devices having limited processing resources.

A first aspect of the present invention is directed to an apparatus for generating a data file, the apparatus comprising: an navigation information generator for generating redundant navigation information records for media samples; and a file constructor for constructing a metadata container and a media data container, the metadata container comprising information indicating presentation times for a plurality of media samples, and the media data comprising the plurality of media samples in a media sample order, wherein the file constructor is operative to construct the media data container such that each media sample has an associated redundant navigation data record included in the media data container.

A second aspect of the present invention is related to a data file reader for reading a data file, the data file reader comprising: a parser for parsing the data file, the data file having a metadata container and a media data container, the metadata container comprising information indicating presentation times or a plurality of media samples, and the media data comprising the plurality of media samples in a media sample order, wherein the media data container furthermore contains redundant navigation information records for each associated media sample indicating a presentation time of the associated media sample, wherein the parser is operative to parse the redundant navigation information record in the media data container, and to interpret the redundant navigation information record to determine a presentation time of the associated media sample in the media data container for a rendering of the media sample at the presentation time.

A third aspect of the present invention is related to a method of generating a data file, comprising: generating redundant navigation information records for media samples; and constructing a metadata container and a media data container, the metadata container comprising information indicating presentation times for a plurality of media samples, and the media data comprising the plurality of media samples in a media sample order, wherein the media data container is constructed such that each media sample has an associated redundant navigation data record included in the media data container.

A fourth aspect of the present invention is related to a method of reading a data file, comprising: parsing the data file, the data file having a metadata container and a media data container, the metadata container comprising information indicating presentation times or a plurality of media samples, and the media data comprising the plurality of media samples in a media sample order, wherein the media data container furthermore contains redundant navigation information records for each associated media sample indicating a presentation time of the associated media sample, wherein the redundant navigation information record in the media data container is parsed and interpreted to determine a presentation time of the associated media sample in the media data container for a rendering of the media sample at the presentation time.

A fifth aspect of the present invention is related to a computer-readable medium having stored thereon a program code for performing a method of generating a data file or a method of reading a data file when the program code is running on a processor.

A sixth aspect of the present invention is the data file transmitted over a transmission channel or stored on a computer-readable medium, which comprises a metadata container and a media data container, the metadata container comprising information indicating presentation times for a plurality of media samples, the media data comprising the plurality of media samples, and, additionally, comprising redundant navigation information records indicating a presentation time of the associated media samples for each media sample in the media data container.

Embodiments of the invention include among others for the apparatus or method for generating that the navigation information generator is operative to generate the navigation information record so that each record has the same size in bytes, or that the file constructor is operative to arrange the redundant navigation information record for an associated media sample immediately before the associated media sample in the media data container, or that the redundant navigation information record includes a media sample size of the associated media sample, or that the navigation information generator is operative to generate the redundant navigation information so that the presentation time is included in absolute millisecond values related to a reference time, or that the navigation information generator is operative to generate the redundant navigation information record so that the redundant navigation information record further includes at least one of the group of a keyframe indication, a track identification and a reserved indicator, or that the data file or the original data file is a file in accordance with the MPEG-4 specification or the QuickTime specification.

Embodiments of the invention include among others for the data file reader or the method of reading that the keyframe is an intra frame of a sequence of video frames, the sequence having, in addition to the intra frame, at least two prediction frames, or as a keyframe an audio frame, or that the parser is operative, in a sequential read mode, to access a chunk offset table for identifying a file position of an intended start media sample, to access the data file at a position being equal to a combination of the file position and a predetermined fixed additional offset, to access the redundant navigation information record for the start media sample, and to read the start media sample based on media sample size information in the redundant navigation information record.

Brief Description of the Drawings

Embodiments of the present invention are shown in the drawings and will be explained in more detail in the description below with reference to same. In the drawings:

Fig. 1 schematically illustrates an apparatus for generating a data file;

Fig. 2 schematically illustrates a more detailed illustration of an embodiment of the apparatus for generating a data file of Fig. 1;

Fig. 3 schematically illustrates an embodiment of a data file reader;

Fig. 4 schematically illustrates a data file in accordance with an aspect of the present invention;

Fig. 5 illustrates a more detailed overview of a redundant navigation record in the space between two subsequent media samples in the media data container;

Fig. 6 illustrates an overview over an MP4-file;

Fig. 7        illustrates an overview of the atom encapsulation structure of the MP4-file format;

Fig. 8        illustrates information on the decoding time to sample atom:

Fig. 9        illustrates information on the sample to chunk atom;

Fig. 10      illustrates information on the chunk offset atom;

Fig. 11      illustrates information on the sync sample atom;

Fig. 12      illustrates information on the sample size atom;

Fig. 13      illustrates a flow chart for a preferred embodiment for preparation for a random access mode;

Fig. 14      illustrates a preferred embodiment for performing a random access based on the preparation of Fig. 13; and

Fig. 15      illustrates a preferred way of performing a sequential read operation based on the preparation for a random access of Fig. 13 or based on information from the metadata container for a target sample.

Detailed Description of Preferred Embodiments

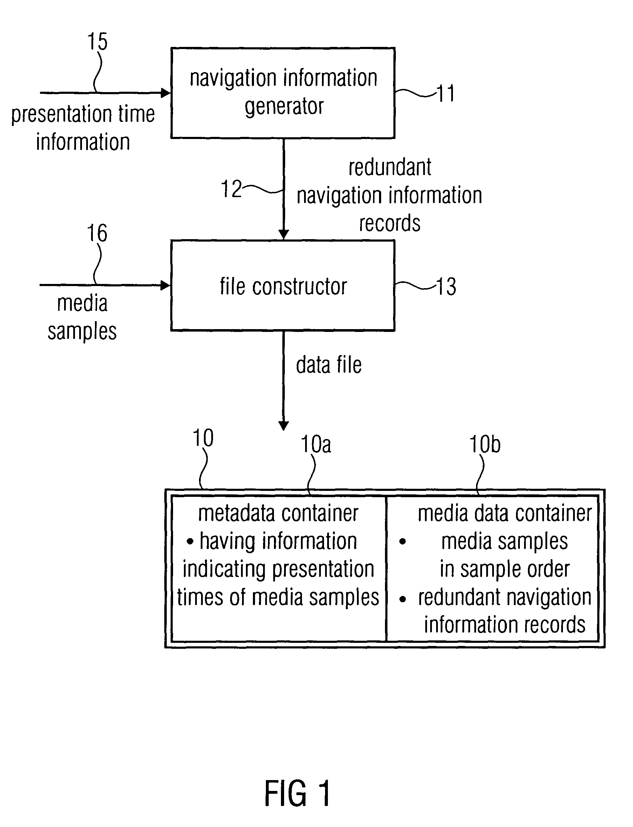

Fig. 1 illustrates an apparatus for generating a data file 10 in accordance with one aspect of the invention. The apparatus comprises a navigation information generator 11 for generating a redundant navigation information record 12 indicating a presentation time of an associated media sample for each associated media sample. The apparatus further comprises a file constructor 13 for constructing a data file 10 having a metadata container 10a and a media data container 10b. The metadata container comprises information indicating presentation times for a plurality of media samples, and the media data container comprises the plurality of media samples in a media sample order. Furthermore, the file constructor 13 is ready to construct the media data container 10b such that each media sample has its associated redundant navigation data record.

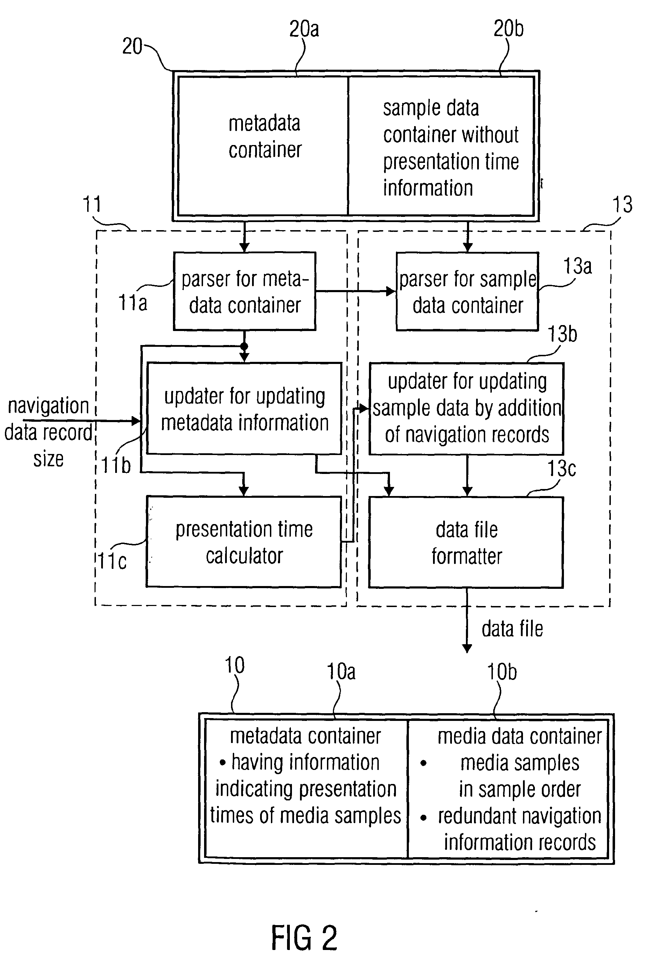

Fig. 1 illustrates a situation, in which the navigation information generator receives presentation and time information 15. Furthermore, the file constructor 13 receives the media samples 16. The presentation time information 15 and the media sample 16 can originate from a source encoder or a file composer. Alternatively, the navigation information generator 11 is operated to read a container-structured original data file having a metadata container and a media data container, but in which the media data container does not include the redundant navigation information records. In this embodiment, which is illustrated in more detail in Fig. 2, the navigation information generator is adapted to parse the metadata container of an original file, and the file constructor is adapted to parse the sample data container of this file.

As illustrated in Fig. 2, an original data file 20 may be a MP4-file or a QuickTime file or any other file having a metadata container and a media data container 20a, 20b. Specifically, the metadata container 20a includes information on the presentation time of media samples, and the media data or sample data container includes media samples without intervening presentation time information records.

Particularly, the navigation information generator 11 from Fig. 1 illustrates a parser 11a for the metadata container 20a, an updater 11b for updating the metadata information of the metadata container 20a, and a presentation time calculator 11c for calculating an absolute presentation time to be introduced into a redundant navigation information record.

The file constructor 13 specifically includes a parser 13a for parsing the sample data container 20b. Furthermore, the file constructor 13 includes an updater 13b for updating the sample data by adding the navigation information records preferably interleaved between the media samples. Furthermore, the file constructor 13 includes a data file formatter 13c for finally formatting and outputting the inventive data file 10, having the metadata container 10a and the sample data container or media data container 10b not only having media samples in the sample order but also having redundant navigation information records for these media samples.

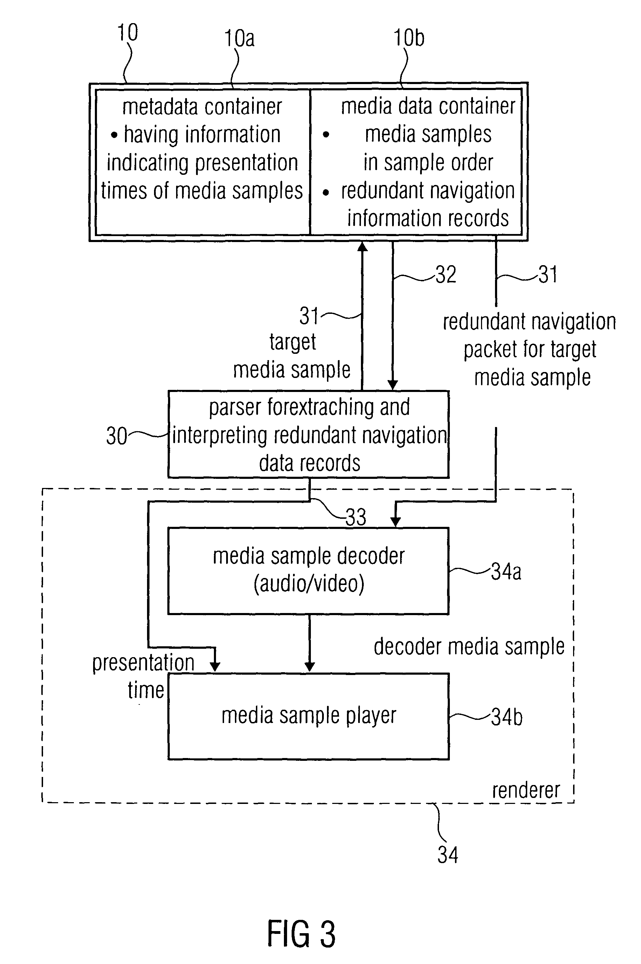

Fig. 3 illustrates a data file reader for reading the data file 10 having the metadata container and the media data container 10a, 10b. Specifically, the data file reader comprises a parser 30 for parsing the data file 10. The parser is operated to parse the redundant navigation data record in the media data container for a specific target media sample as indicated by 31. Based on the redundant navigation packet for the target media sample as indicated by 32, the parser furthermore interprets the redundant navigation information record to determine a presentation time 33 of the associated target media sample 31 in the media data container 10b, for example for subsequent rendering of the target media sample 31 at the presentation time 33 by means of a renderer 34. The renderer 34 may include a media sample decoder 34a and a media sample player 34b. To this end, the media sampler decoder 34a accesses the media data container and achieves the target media sample 31 as schematically illustrated by the arrow connecting blocks 10 and 34a. The media sample decoder 34a may be an audio decoder or a video decoder or may include both decoding cores when the file is an audio and video file.

The media sample decoder 34 provides the decoded media sample to the media sample player 34b which may include speaker drivers for audio playing or a display for video playing. Additionally, the media sample player 34b receives the presentation time for the decoded media sample and is operated to play the corresponding media sample at the correct presentation time.

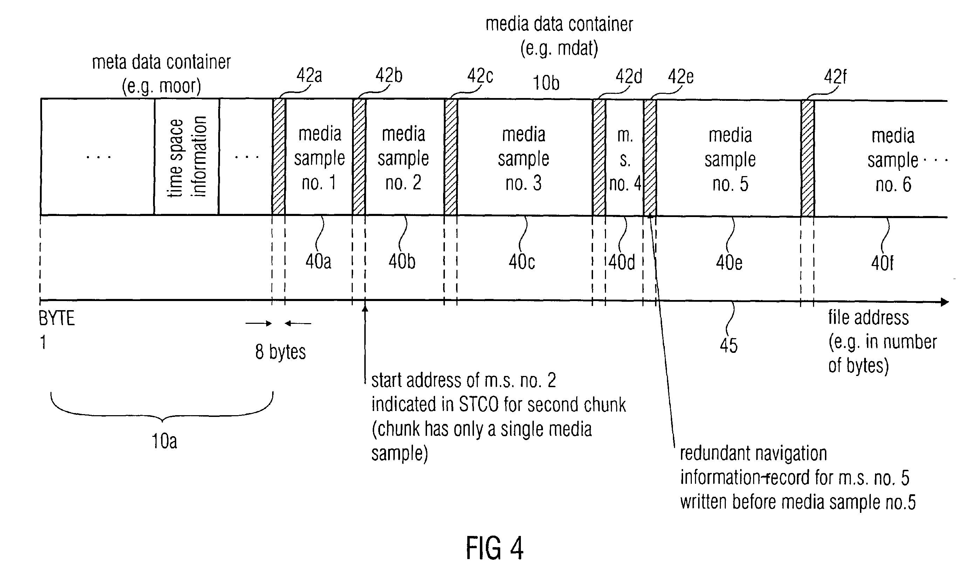

Fig. 4 illustrates a preferred embodiment of the inventive media file 10 in more detail. Media file 10 once again includes the metadata container 10a and the media data container 10b. In the context of MPEG-4, the metadata container 10a corresponds to the MOOV atom, and the media data container corresponds to the MDAT atom as indicated in the context of Fig. 7. Specifically, the metadata container 10a includes presentation time information which is indicated as "time space information" in Fig. 4. Naturally, the metadata container 10a may include additional metadata such as all metadata as indicated in Fig. 7 for the MOOV atom.

In the media data container 10b, however, the media samples 40a, 40b, 40c, 40d, 40e, 40f are not written adjacent to each other any more, but are written so that before each media sample, the associated redundant navigation information record is placed. Thus, media sample 40a has the redundant navigation information record 42a associated therewith. Exemplarily, media sample 40e, i.e. media sample no. 5 has the associated redundant navigation information record 42e. In the Fig. 4 embodiment, all redundant navigation information records are written before the associated media sample. Furthermore, Fig. 4 indicates a file address axis 45, which is directed from left to right so that the first byte of the metadata container is byte 0 In this context, it is to be noted that address calculations are usually done relative to byte 0, but there exist other alternatives, where an address calculation is done relative to a reference byte different from byte zero.

Therefore, each media sample has a certain offset with respect to this byte 0 or with respect to a reference byte, which is included in the chunk of this atom STCO as illustrated in Fig. 10. Therefore, this table allows a reader to access each media sample by starting reading this media sample at the start address of the media sample which is indicated in the chunk offset atom STCO.

It is noted that the size of a navigation information record, which is in the Fig. 4 embodiment equal to 8 bytes, is illustrated in a highly exaggerated manner compared to the size of the corresponding media sample. Normally, a media sample has many more bytes than 8 bytes. Thus, the additional overhead introduced by the redundant navigation information records is modest. Stated differently, a data file having the inventive redundant navigation information records has a file size which is greater than the file size of a straight-forward MP4-file which only has media samples in the media data container 10b. The file address axis 45 prescribes a certain structure within the MP4-file. Typically, the file address axis direction will also correspond to the read direction which the reader applies when the reader has detected that there is an MP4-file. This means that the reader starts at byte 0 and normally firstly reads the media data container, and as soon as the media data container is read, the file reader starts with reading and rendering the media samples. The meta data container may be placed before the media data container or after the media data container. Generally, an order is not imposed. This is specifically true for MPEG.

In accordance to the present invention, however, only a small portion of the media data container is required for reading the media samples due to the fact that each media sample has associated therewith the redundant navigation information record 42a to 42f, which includes the necessary information for parsing and finally rendering this media sample.

The difference between Fig. 4 file 10 and a straight-forward MP4-file is that in a straight-forward MP4-file, a media data container 10b includes the media samples without the redundant navigation information records 42a, 42b, 42c. Therefore, in such a straight-forward file, the first byte of the media sample no. 2 immediately follows the last byte of the medium sample no. 1. In accordance with the present invention, however, the byte or file position of the first byte of the media sample no. 2 is equal to the file position of the last byte of media sample no. 1 plus the additional offset of, e.g., 8 bytes incurred by the size of the redundant navigation information record.

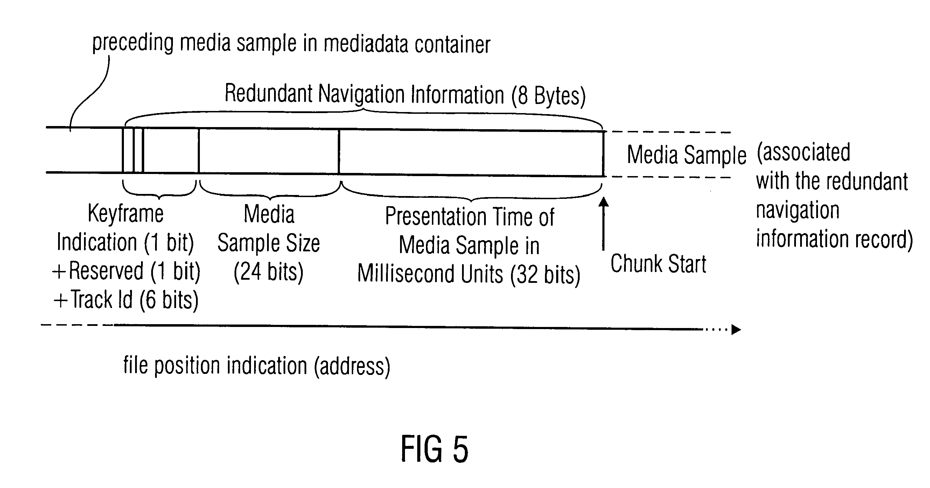

Fig. 5 illustrates a more detailed overview of a redundant navigation information record having a preferred size of 8 bytes.

The Navigation Information applies for the respective following Media Sample. The *Key frame* bit is to be set according to the Sync-Sample Table Information in the MP4-file.. The value Track Id has to match the trackid from the track-header ('tkhd') of the respective media track.

If the *Reserved* bit is set, then the next "*Sample Size*" bytes after the Navigation Information should be skipped. The reserved bit is present to prepare future extensions of this proposal. Although the reserved bit is useful for several applications, one can as well implement the invention without using a reserved bit.

The *Sample Size* is expressed in bytes.

The *Presentation Time* does not take into account any possibly present edit-list in the respective MP4-file track.

E.g. if an initial empty edit is present in the edit-list of the track, then it's duration will need to be added to the value of the presentation time field in order to obtain the final presentation time.

Fig. 5 additionally underlines that the redundant navigation information record is preferably placed between two subsequent media samples.

The present invention may be implemented in different application scenarios. The first application scenario is that the inventive reader generates an inventive data file from scratch, i.e. without a preceding "original" file already written in a kind of a container-like structure. Thus, this file generator receives presentation time information and media samples in any format different from a container-like format and generates the inventive container-like file 10 illustrated in Fig. 1. In an alternative implementation, which is illustrated in Fig. 2, a file reader receives a container-like file. In this case, the file generator generally maintains the structure of the container-like file, but modifies data within those containers. Therefore, the Fig. 2 embodiment can be considered as a file converter. The file reader as indicated in Fig. 3 can also be implemented in different embodiments. In one embodiment, the file reader in Fig. 3 is implemented in a mobile device and is directly associated to the renderer 34 in Fig. 3. Thus, the media sample player 34b renders a media file without performing any intermediate storage of a certain file in any formats. An alternative implementation is a file "back" conversion, i.e. when the parser 30 is connected to a file constructor for generating for example a prior art MP4-file without the redundant navigation information records in the media data container or for generating any other file in a table-based format or in a streaming format.

Subsequently, the Fig. 2 embodiment relating to a file converter is discussed in more detail. This embodiment is advantageous in that the inventive media file 10 can be used by a straight-forward legacy file reader as well. The legacy file reader will, as clearly outlined subsequently, feel that the inventive file is a regular, for example MP4-file, and the legacy file reader will not be disturbed by the redundant navigation information records included in the sample data container due to the fact that the legacy file reader will automatically skip these records due to the updated STCO atom as outlined below.

The parser for parsing the metadata container, which is indicated at 11a in Fig. 2, will parse the metadata container of a legacy MP4-file 20. This is done in order to perform some specific changes to the MOOV atom. In context with Fig. 5, the updater 11b for updating the metadata information will write the key frame indication bit in Fig. 1. This bit is set according to the sync-sample table information in the MPEG-4 file. This bit indicates that a following media sample is a sync frame such as an intra frame or not. This sync-sample table information is included in the STSS atom as defined under section 13.2.3.21 of the standard. The keyframe indication bit maps directly to the information in the sync-sample table atom (STSS). This specific handling of the Keyframe indication bit is, however, only required for video streams, but would not be required for an audio file or for the portion of a multimedia file including audio information. Alternatively, the Keyframe indication bit for audio samples may be insert to be always one. The lay-out of the navigation information record, however, is preferably always the same, no matter if an audio or video sample follows, since a priori the type of the sample located after the navigation information is normally not known to a reader in accordance with the present invention.

The track ID including 6 bits as indicated in Fig. 5, is taken from the TKHD atom as defined in section 13.2.3.6 of the MPEG-4 standard. Specifically, the track ID is found by the parser 11a and used by the updater 11b. However, as the track ID is represented only by 7 bits (without a reserved bit) or 6 bits (if a reserved bit is provided), it is not possible to directly map track Ids from TKHD with the value greater or equal 128 to a converted file. Normally, this is sufficient, since a remapping of track Ids can easily be performed during the conversion process and it is assumed that the amount of possible track is still sufficient for all relevant cases.

The media sample size of 24 bits is included in the redundant navigation information record. The media sample size does not have to be calculated in a specific way, but can just be taken from the sample size atom STSZ as defined under section 13.2.3.18 of the standard and as illustrated in Fig. 12.

Subsequently, the presentation time calculator 11c will be discussed in more detail. The presentation time of each media sample in ms units is included into the redundant navigation information. To calculate the actual presentation time of a media sample, the decoding time to a sample atom STTS is defined under section 13.2.3.16.1 and the composition time to sample atom CTTS as defined under section 13.2.3.16.2 are used.

In a preferred embodiment, the presentation time calculator 11c in Fig. 2 does not take into account possible edit list entries for calculating the presentation time as it is to be included in the navigation information record. Thus, a possible present edit list is taken into account by a reader compliant with the invention in addition to the redundant navigation information record.

In real life applications, edit lists are normally not used to their full extent. Many readers do not even parse the ELST atom as indicated in Fig. 7 as part of the EDTS container at all. This is due to implementation complexity and therefore, the lack of support in actual MP4 reader implementations. Preferably, a simple case of a possibly present initial empty edit list considered, since this is useful for modeling a delayed start time of a track.

The following equation results in a specific decoding time stamp (DTS) of a sample n:

$$DTSn = Sum(d0 \ldots d(n-1))$$

In this equation, di (i = 0 ..., n -1) denotes the duration of a sample measured in the track time scale. In fact all di values map directly to STTS. Furthermore, DTSn is the decoding time stamp of sample n in units of the time scale as given in the MDHD atom, i.e., the media header having overall information about the media as indicated in Fig. 7.

The following equation results in the presentation time of a sample n which is indicated as PTSn:

$$PTSn = DTSn + CTn - CT0.$$

In the above equation, CTn denotes the composition time offset for sample n as indicated in the CTTS atom. Specifically, CT0 refers to the composition time offset of the first sample in the respective track. Therefore, CT0 is included in the calculation so that the time stamp of the first sample for each track equals 0.

PTSn refers to the presentation time of the sample n in the track under consideration. PTSn is measured in units of time scale as given in the MDHD atom of the respective track. The final time stamp value Tn to be used in the redundant navigation information record for the media sample i is, therefore, derived as follows:

$$Tn = PTSn \times 1000/MDHD.time \ scale.$$

Tn is the final time stamp value which is the absolute presentation time for the media sample in milliseconds.

In accordance with the present invention, the presentation time is included into the redundant navigation information in absolute terms. While the meta data container includes information in differential or relative terms as included in the STTS atom and in the CTTS atom, the redundant navigation information presentation time is given in absolute terms and, preferably, even in an absolute time in milliseconds. While differential timing information is something which is characteristic for table-based containers like the MPEG-4 or, for example, the AVI container, the present invention uses absolute timing information for the redundant navigation information record. Differential timing information can be used for synchronization if the information is available for all samples up to the sample under consideration, since at some point still an absolute time value will need to be derived from a series of differential timings. In streaming scenarios, differential information about previous samples is normally not available. This is the case for a reader compliant with the present invention, since such a reader will not, and this is an aspect of the present invention, store differential time information from the well-known STTS table in memory. In order to not have to store this differential time information and to, therefore, require a smaller amount of memory resources, the timings are coded as absolute values. Because the unit of a second as a time scale would not provide the necessary accuracy for synchronization purposes in some applications, the time scale of milliseconds is preferred.

As soon as the navigation information generator 11 has completed the calculation and collection of a redundant navigation information record, this record is written into the sample data container before a subsequently written associated media sample. These tasks are performed by the data file formatter 13c of Fig. 2. Thus, the result of this operation is a file illustrated in Fig. 4 or Fig. 5.

Subsequently, the modification of the meta data container as performed by the updater 11b of Fig. 2 will be discussed. The file converter in accordance with the present invention preferable re-writes information in the MOOV atom as well. First or all, an indication of the presence of the inventive digital streaming extension is included in the MOOV user data space. Specifically, this information is preferably written into the UDTA atom as indicated in the last line of the table in Fig. 7. The identification box/atom is preferably part of this user data atom UDTA contained in the MOOV.

Furthermore, the file converter is operated to restructure the chunk/sample relation, when the input file indicates several samples within a single chunk. This is due to the fact that it is preferred that only a single sample per chunk is allowed. This has specific implications on the sample to chunk atom STSC as given in Fig. 9 and as defined under section 13.2.3.19 of the standard. Specifically, the updater 11b will update this table so that each chunk only includes a single sample. Additionally, corresponding modifications of other data which are directly resulting from this single sample/single chunk relation are performed as well by the updater 11b.

Furthermore, the updater 11b will amend the chunk offset atom STCO as defined under section 13.2.3.20 and Fig. 10. This is due to the fact that the general chunk structure is changed to have a single sample per chunk. Thus, compared to a file in which there is a situation where one has several samples per chunk, the chunk number is increased.

The second reason for the change in the chunk offset atom STCO is that the 8 bytes record length - generally stated - the length of the redundant navigation information record has to be accounted for due to the fact that the chunk offset element gives the absolute offset of the start of a chunk into its containing media stream or file in absolute byte units. This has already been discussed in connection with Fig. 4. Alternatively, other addressing schemes within the file indicating the start of a media sample can be applied as well, such as addresses, pointers, indirect pointers, virtual addressing operations etc.

However, all other elements in the MOOV atom remain unchanged. Therefore, the updater 11b only has to process a part of the media data container, while the rest of the media container i.e., the atoms which have not been specifically discussed do not have to be amended and can be copied from the original media data container 20a to the new media data container.

The maximum allowed Track Id is 63. Each mediasample is stored in it's own chunk (normally it is possible to group multiple samples from the same track within a chunk). Additional empty (unreferenced) space in between media samples, which is not covered by this proposal, is not allowed. The media samples are physically interleaved according to the timeline.

The presence of the Nero Digital Streaming Extensions can be concluded from the presence of the Custom Streaming Extensions Box in the Moov-Userdata space of the MP4-file:

```
#define UUID_STRX        \
     's', 't', 'r', 'x',        \
     0xf9, 0x3f, 0x1e, 0x4d, 0xbb, 0xba, 0x75, 0x08, 0xc3,
     0x82, 0xa2, 0xca
```

In one embodiment, a transcoder reads a straight forward mp4 file having a normal moov atom and a normal mdat atom without any control data or meta data. This transcoder selects certain information from the moov atom and writes this information interleaved between the chunks in the mdat atom. The chunk offset stco as defined eg. In table 54 of ISO/IEC 14496-1:2002 can be updated to generate a new backward compatible mp4 file. Thus, the new stco information makes sure that the control/metadata between the chunks in the mdat atom are transparent for a straight-forward mp4 player having enough resources to read in the full moov data of 4 - 6 Mbytes. This straightforward reader, thus, skips these data due to the chunk offset data. The transcoder furthermore generates a specific identification in a user data field for an enhanced mp4 player.

The enhanced mp4 player reads in the user data field and retrieves the identification if available. Then, the player in an embodiment only reads in the stss and stco data to find a position in the mdat atom, where a video frame or an audio frame starts. Then, the enhanced player steps back a predetermined amount of data from the data position or address indicated by the chunk offset information. In the above embodiment, the amount of stepping back or going away from the address indicated by the data in the moov atom is 8 bytes. Other values can be used as well. Then the enhanced player starts to read these 8 bytes in accordance with a predefined syntax and retrieves the data necessary for rendering the subsequent audio or video frame. In an embodiment, the navigation/control data or metadata for the next frame start immediately after the end of the current frame (chunk) or a predetermined number of bits before the start of the next frame. This means that the enhanced reader can go from frame to frame without always retrieving any data from a different place.

Thus, the mp4 file reader can use the navigation data written in a specific relation to the frame such as before the frame with respect to a reading direction to check out whether a frame is an audio frame or video frame or any other frame and to send the frame to the identified decoder. Additionally, the sample size or the presentation time can also forwarded to the respective decoder when needed.

Thus, embodiments of the invention include a transcoder, method of transcoding or computer program for reading a first file and for generating a second file having redundant data with respect to the first file and having control or navigation data belonging to frames or chunks interleaved between the frames.

Further embodiments of the invention include a reader, method of reading or computer program for reading a second file having redundant data with respect to the first file and having control or navigation data belonging to frames or chunks interleaved between the frames, wherein a portion of data read between frames is not read from another portion of the file, and wherein a predetermined position with respect to a frame or chunk is used for reading the control or navigation data belonging to the frame or chunk.

Further embodiments of the invention include a file having redundant data with respect to another file and having control or navigation data belonging to frames or chunks which data is interleaved between the frames or chunks.

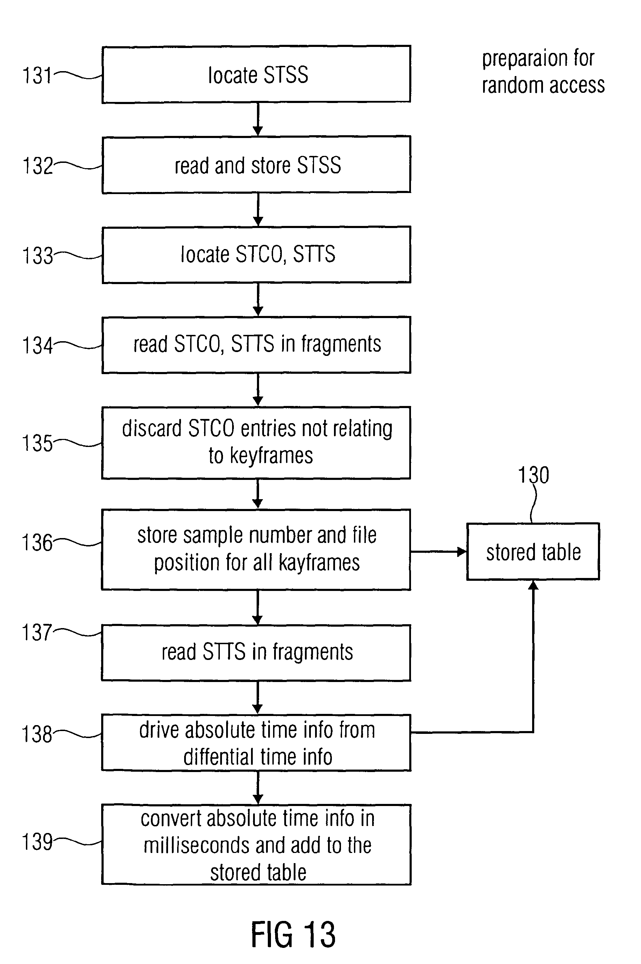

Subsequently, the operation of an inventive reader will be discussed in the context of Figs. 13, 14 and 15. When starting a reading operation, the reader firstly determines the UDTA atom of the meta data container 10b, to check out whether there is a specific indication saying that this file is a Nero digital streaming extension file. When this is positively determined, the reader reads several portions of the MOOV atom, but in contrast to a prior art reader does not completely read or store the STSZ, STSC, STCO, STTS and STSS atoms as will be discussed subsequently.

When the reader has determined that there is a Nero digital streaming extension file, the reader reads the edit list atom ELST into memory. This is due to the fact that timing information in the extra navigation packet does not take into account edit lists. When, for example, a track shall have a delayed start, then this is usually accomplished by means of an initial empty edit and the duration of this initial empty edit has to be added to the time from the extra navigation packs by the reader. Alternatively, the edit list can already be account for in the redundant navigation information packet. In this case, the ELST atom is not required by the inventive reader.

Subsequently, an initial preparation of a reader for a random access operation is discussed in detail. This initial operation, however, can also be performed without an intention to perform a random access. This preparation could for example be also useful for only determining a small number of entry points such as the first sample of a scene in a movie or even only the first frame of each individual movie in a file having more than one movie.

One aspect of the reader is that it keeps a list of information including information pairs of presentation time and file position for all (video) key frames for enabling fast random access in the file. This is indicated in Fig. 13 as the "stored table" 130. The information for this list is inferred by the reader from the tables STSS, STCO, STTS. In this context, it is mentioned that all key frames have the same value for CTTS. Therefore, one does not require CTTS at this time.

At step 131, the reader first locates the STSS table and reads it entirely into memory as indicated at step 132. In step 133, the reader and, particularity, the passer 30 of Fig. 3 locates STCO and STTS. STCO is read in suitably small fragments. Thus, it does not have to be entirely buffered into memory. While reading the STCO fragments, the reader discards any entry which does not map to a sync-sample (key frame) and remembers the information regarding sample number and file position for all sync tables. This is indicated at steps 134, 135, 136 in Fig. 13. The stored table 130 now includes the sample number and the file position of each key frame, i.e., for each frame which provides the possibility for a random access into the media data of the media file. In step 137, the reader proceeds to the STTS table which is read in the same fragmented style as the STCO table. While processing the fragments, the reader derives the absolute time information for the remembered sync sample numbers from the differential time information of the processed STTS fragments as illustrated at step 138 in Fig. 13. The calculation of the absolute time information can be performed in the same manner as has been described in connection with the presentation time calculator 11c of Fig. 2. Then, when the absolute time for a sync sample is available, the reader converts the time to milliseconds using the time scale from the MDHD atom, and adds a respective entry to the initially mentioned stored table 130. Thus, the stored table 130 includes, for each key frame, the file position and the absolute presentation time. Typically, the stored table 130 will, in addition, include an indication such as a key frame index or any other indication. Alternatively, this indication could also have been omitted and could be implicitly indicated by the order of the presentation time/file position pairs/entries in the stored table 130. In one embodiment, the stored table 130 is a table of keyframe-offsets and their respective timings. This format is useful, since it allows a compact table consuming a reduced amount of storage compared to storing keyframe indications in absolute terms.

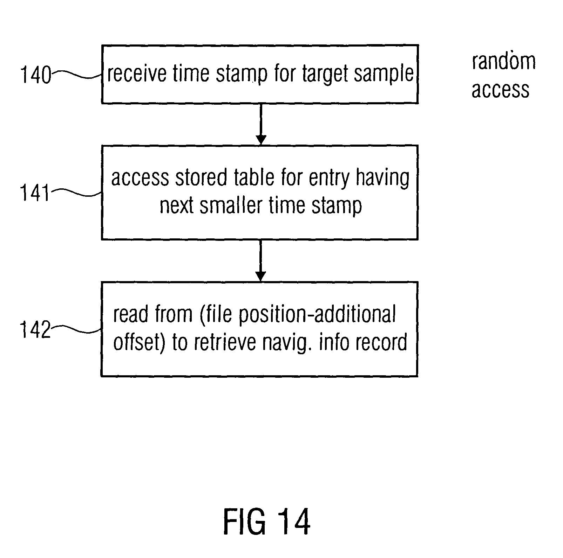

Subsequently, Fig. 14 will be discussed in order to illustrate how a random access is performed in one embodiment. Random access means that a user can access any key frame media sample within the media data container without having to start playing the file only at the first sample with the earliest presentation time. To this end, a user indicates a certain point in time or a certain track or a certain sample where she or he wishes to access the media file. This user request is converted into a time stamp for a target sample, and this time stamp for a target sample is received by the parser 30 of Fig. 3 as indicated at step 140. Now, the parser 30 accesses the stored table 130 from Fig. 13 and looks for an entry having a next smaller time stamp compared to the time stamp received in step 140. Specifically, the reader determines from the presentation time/file position list the file position of the video-sync-sample which has the biggest time stamp which is nevertheless smaller than the target time stamp for the seek operation. The reader now jumps to that byte position - 8 bytes, since the navigation information always start 8 bytes in front of the respective sample in a preferred embodiment as indicated by step 142. Now, the reader starts reading samples by means of the navigation information packets it encounters. Thus, the stored table 130 is only required for finding the key frame media sample and its associated navigation information.

Then, as soon as this "first media sample" of a playing operation is found, all information required for playing the media file is included in the navigation data records which are interspersed between two subsequent media samples as has been illustrated in connection with Fig. 4.

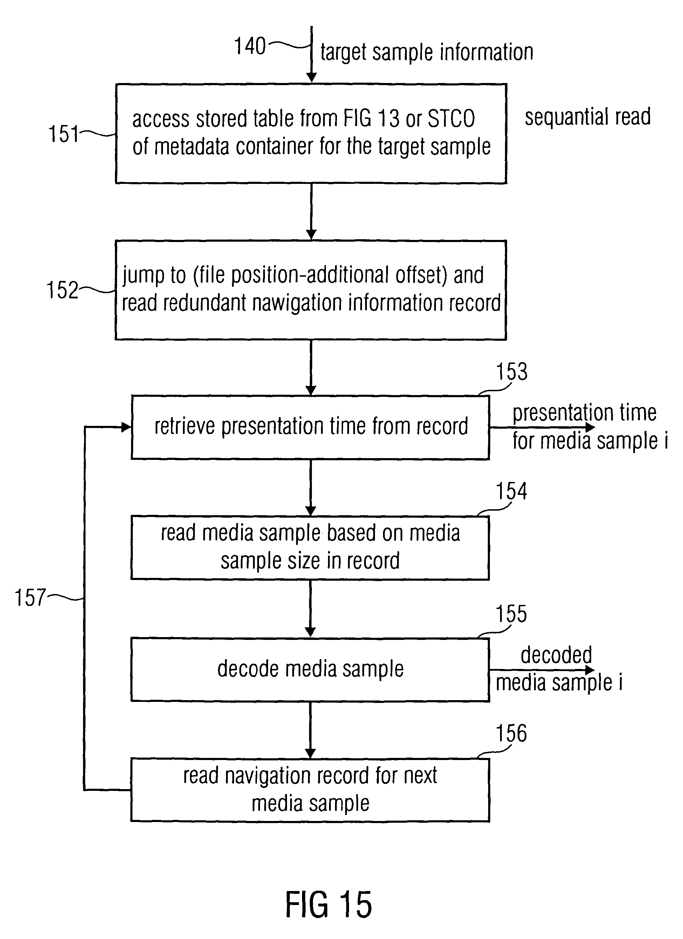

This sequential read operation will be discussed in more detail in connection with Fig. 15. The parser 30 of Fig. 3 receives the target sample information which is a similar operation as has been discussed in connection with Fig. 14 at 140. Then, as discussed in connection with step 141, the parser 30 of Fig. 3 accesses the stored table from Fig. 13 or, alternatively, when such a stored table is not provided, accesses the STCO atom of the meta data container for finding the chunk offset of the target sample as indicated at 151. Such a reader may not provide random access functionality or, for example, only has a single key frame which is the first key frame of an actual data file. Alternatively, as discussed above, the information from the STCO atom might be sufficient, since the absolute presentation time for a very first video frame or audio frame is not so important, since a player can start a data file whenever it likes to do so. However, the presentation time of the "second" media sample is required, but is then included in the navigation information record following the first (accessed) media sample and preceding the second (next) media sample. Thus, in step 152 an inventive reader in one embodiment jumps to the "first" redundant navigation information record, for example for retrieving the sample size. However, as discussed above, the presentation time is not necessarily required for this first sample. Then, in step 153, the presentation time may be retrieved for this first sample, for example in a multimedia presentation, where audio and video have to be synchronized in a way. Alternatively, as stated before, the presentation time of the first media sample is not necessarily required.

Then, in step 154 the reader reads the actual first media sample based on the media sample size in the navigation information record. In step 155, the media sample decoder 34a of Fig. 3 decodes the media sample and outputs a decoded media sample. This output can be connected to the media sample player 34 in Fig. 3. In step 156, the reader reads the navigation record for the next media sample which is immediately following the first media sample. Then, the process loops back to step 153 as indicated by arrow 157 in order to perform steps 153, 154, 155 and 156 for the second and the following media samples.

In a preferred embodiment, an application wishing to perform a random access to a passage in a media file will request a random access to a specific point in time rather than to a specific target sample number. Then, the reader performs the translation from the requested time instant to the respective target sample number.

In a preferred embodiment, the inventive media file is fully compatible to a legacy reader which skips the redundant navigation information in the MDAT atom due to the updated information in the STCO atom.

On the other hand, the inventive reader, when reading the STCO table will not take the chunk offset values as they are, but will automatically subtract a value of 8 from the chunk offset values in order to start reading at the beginning of the redundant navigation information. Alternatively, when the reader relies on the stored table 130 of Fig. 13, then the entries are also not used as they are but the additional offset value regarding the size of the navigation data information record will be subtracted. Alternatively, however, the stored table 113 may even be built in such a way that the redundant navigation information record size is already accounted for and this "automatic subtraction operation" does not have to be performed. All in all, however, the most useful functionality is achieved, when the stored table feature as discussed above is implemented.

While the foregoing has been particularly shown and described with reference to particular embodiments thereof, it will be understood by those skilled in the art that various other changes in the form and details may be made without departing from the spirit and scope thereof. It is to be understood that various changes may be made in adapting to different embodiments without departing from the broader concepts disclosed herein and comprehended by the claims that follow.

**Claims**

1. Apparatus for generating a data file, the apparatus comprising:

    an navigation information generator for generating redundant navigation information records for media samples; and

    a file constructor for constructing a metadata container and a media data container, the metadata container comprising information indicating presentation times for a plurality of media samples, and the media data comprising the plurality of media samples in a media sample order,

    wherein the file constructor is operative to construct the media data container such that each media sample has an associated redundant navigation data record included in the media data container.

2. The apparatus in accordance with claim 1, in which the file constructor is operative to place a redundant navigation information record between two media samples so that each media sample of the plurality of media samples is preceded by a redundant navigation information record.

3. The apparatus in accordance with claim 1 or 2, in which the media sample order is determined by an address space and a corresponding address order, in which the addresses in the address space are arranged, or in which the media sample order is determined by an order of reading the media data container in a streaming mode determined by a data format standard, or
in which the media samples are frames of audio or video data being arranged in the media data container such that a media sample having a later presentation time is arranged in the media data container in a reading direction subsequent to a media sample having an earlier presentation time.

4. The apparatus in accordance with claim 1, in which the file constructor is operative to write the data file so that the metadata container only includes metadata and does not include media sample data.

5. The apparatus in accordance with claim 1, in which the navigation information generator is operative to generate the redundant navigation information so that the presentation time is included in absolute values related to a reference time.

6. The apparatus in accordance with claim 1, in which the file constructor is operative to generate the data file so that the metadata container includes address information for indicating a start of each media sample, wherein the address information is written so that a start of the redundant navigation information record is not indicated and a start of the associated media sample is indicated, and wherein the file constructor is operative to generate the file so that it is readable by a reader not being able to parse the redundant navigation information records.

7. The apparatus in accordance with claim 1, in which the file constructor is operative to construct the metadata container so that the metadata container includes presentation time information in relative terms, in which an absolute presentation time of a third media sample in the media sample order is only determinable using a presentation time of a second media sample in the media sample order, and
in which the file constructor is operative to construct the media data container so that the redundant navigation information record includes an absolute presentation time information so that a presentation time of the third media sample is determined without using a presentation time of the second media sample.

8. The apparatus in accordance with claim 1, further comprising a file reader for reading an original data file having a metadata container and a media data container, the metadata container comprising information indicating presentation times for a plurality of media samples, and the media data comprising the plurality of media samples, and wherein the navigation information calculator is operative to read the presentation time information from the metadata container and to calculate the presentation time based on the information read.

9. The apparatus in accordance with claim 8, in which the metadata container of the original data file includes a chunk offset table indication having offsets with respect to a reference position of the original file of sample in the media data container, and
in which the navigation information calculator is operative to retrieve the chunk offset table and to calculate a new chunk offset table accounting for a storage space required by the redundant navigation information data.

10. The apparatus in accordance with claim 8 or 9, in which the metadata container includes a sample to chunk table indicating that the plurality of samples belongs to one and the same chunk, and
in which the redundant navigation information generator is operative to rewrite the sample to chunk table so that each chunk includes only a single sample.

11. The apparatus in accordance with claim 8, in which the metadata container of the original file includes a user data container, and
in which the redundant navigation information generator is operative to rewrite the user data container by inserting an indication that the data file is having redundant navigation information records in the media data container.

12. The apparatus in accordance with claim 8, in which the file constructor is operative such that a start address of a media sample in the media data container of the data file is increased with respect to the start address of the media sample in the original media data container by an amount based on a number of previously inserted redundant navigation information records and the sizes of the previously inserted redundant navigation information records.

13. Data file reader for reading a data file, the data file reader comprising:

a parser for parsing the data file, the data file having a metadata container and a media data container, the metadata container comprising information indicating presentation times or a plurality of media samples, and the media data comprising the plurality of media samples in a media sample order, wherein the media data container furthermore contains redundant navigation information records for each associated media sample indicating a presentation time of the associated media sample,

wherein the parser is operative to parse the redundant navigation information record in the media data container, and to interpret the redundant navigation information record to determine a presentation time of the associated media sample in the media data container for a rendering of the media sample at the presentation time.

14. The data file reader in accordance with claim 13, in which the metadata container includes a chunk offset table indicating offsets of media samples with respect to a reference position of the data file, and in which the data parser is operative to read the chunk offset table and to apply an additional offset for accessing an entry of the redundant data record for a media sample indicated by the entry in the chunk offset table.

15. The data file reader of claim 13, in which the plurality of redundant navigation data records have a fixed size in bytes, and wherein an additional offset depends on the fixed size, wherein the additional offset is to be applied, when the data file is to be accessed.

16. The data file reader in accordance with claim 13, in which the parser is operative to keep a list of information including presentation time and file position for keyframes, a keyframe including a media sample from a group of several media samples for random access.

17. The data file reader in accordance with claim 13, in which the parser is operative to
locate a sync-sample map,
read the sync-sample map into memory,
locate a chunk offset table and a decoding time to sample table,
read the chunk offset table in table fragments,
discard entries not relating to a key frame,
store a table comprising a sample number and a file position information for the keyframe,
read the time to sample table in table fragments and calculate absolute time information for the key frames, and
add time information to the stored table for the keyframes.

18. The data file reader of claim 13,
in which the parser is operative to keep a stored table having, for each keyframe, file position information and absolute time information, and
in which the parser is operative to receive a random access user request indicating a user-selected presentation time, to retrieve a matching time from the stored table, and to access the media sample indicated by the file position information in the table.

19. The data file reader in accordance with claim 13, in which the parser is operative
to find a beginning of a redundant navigation information for a next media sample using the media sample size information, and
to determine a presentation time of the next media sample based on the redundant navigation information record for the next media sample, and
in which the parser is operative to control a data renderer to render the next media sample based on the presentation time.

20. Method of generating a data file, comprising:

generating redundant navigation information records for media samples; and
constructing a metadata container and a media data container, the metadata container comprising information indicating presentation times for a plurality of media samples, and the media data comprising the plurality of media samples in a media sample order,

wherein the media data container is constructed such that each media sample has an associated redundant navigation data record included in the media data container.

21. Method of reading a data file, comprising:

parsing the data file, the data file having a metadata container and a media data container, the metadata container comprising information indicating presentation times or a plurality of media samples, and the media data comprising the plurality of media samples in a media sample order, wherein the media data container furthermore contains redundant navigation information records for each associated media sample indicating a presentation time of the associated media sample,

wherein the redundant navigation information record in the media data container is parsed and interpreted to determine a presentation time of the associated media sample in the media data container for a rendering of the media sample at the presentation time.

22. Computer program having a program code for performing the method of claim 20 or 21 when the computer program runs on a processor.

23. Data file having a metadata container and a media data container, the metadata container comprising information indicating presentation times or a plurality of media samples, and the media data comprising the plurality of media samples in a media sample order,
wherein the media data container furthermore contains redundant navigation information records for each associated media sample indicating a presentation time of the respective associated media sample.

15

presentation time
information

navigation information
generator

11

12 ~ redundant
navigation information
records

16

media
samples

file constructor

13

data file

10 10a 10b

| metadata container | media data container |
|---|---|
| • having information indicating presentation times of media samples | • media samples in sample order<br>• redundant navigation information records |

FIG 1

FIG 2

FIG 3

meta data container
(e.g. moor)

time space information

media data container
(e.g. mdat)

42a 42b 42c 10b 42d 42e 42f

media sample no. 1

media sample no. 2

media sample no. 3

m. s. no. 4

media sample no. 5

media sample ··· no. 6

40a 40b 40c 40d 40e 40f

BYTE 1

8 bytes

10a

start address of m.s. no. 2 indicated in STCO for second chunk (chunk has only a single media sample)

45

file address (e.g. in number of bytes)

redundant navigation information-record for m.s. no. 5 written before media sample no.5

FIG 4

EP 1 980 958 A2

preceding media sample in mediadata container

Redundant Navigation Information (8 Bytes)

Media Sample (associated with the redundant navigation information record)

Keyframe Indication (1 bit) +Reserved (1 bit) +Track Id (6 bits)

Media Sample Size (24 bits)

Presentation Time of Media Sample in Millisecond Units (32 bits)

Chunk Start

file position indication (address)

FIG 5

EP 1 980 958 A2

1400                                    1402

mp4 file

| moov | | | | mdat |
|------|---|---|---|------|

moov

IOD

trak (BIFS)

trak (OD)

...other atoms

trak (video)

trak (audio)

mdat

Interleaved, time-ordered, BIFS, OD, video, and audio access units

ISO/IEC 14496-1:2002

FIG 6 (prior art)

## FIG 7 (prior art)

Overview of Atom Encapsulation Structure

| Level 1 | Level 2 | Level 3 | Level 4 | Level 5 | Level 6 | * | Section | Description |
|---|---|---|---|---|---|---|---|---|
| Moov | | | | | | | 13.2.3.1 | container for all the meta-data |
| | mvhd | | | | | * | 13.2.3.3 | movie header, overall declaration |
| | iods | | | | | | 13.2.3.4 | object descriptor |
| | trak | | | | | * | 13.2.3.5 | container for an individual track or stream |
| | | tkhd | | | | * | 13.2.3.6 | track header, overall information about the track |
| | | tref | | | | | 13.2.3.7 | track reference container |
| | | edts | | | | | 13.2.3.25 | edit list container |
| | | | elst | | | | 13.2.3.26 | an edit list |
| | | mdia | | | | * | 13.2.3.8 | container for the media information in a track |
| | | | mdhd | | | * | 13.2.3.9 | media header, overall information about the media |
| | | | hdlr | | | * | 13.2.3.10 | handler, at this level, the media (handler) type |
| | | | minf | | | * | 13.2.3.11 | media information container |
| | | | | vmhd | | | 13.2.3.12.1 | video media header, overall information (video track only) |
| | | | | smhd | | | 13.2.3.12.2 | sound media header, overall information (sound track only) |
| | | | | hmhd | | | 13.2.3.12.3 | hint media header, overall information (hint track only) |
| | | | | <mpeg> | | | 13.2.3.12.4 | mpeg stream header |
| | | | | dinf | | * | 13.2.3.13 | data information atom, container |
| | | | | | dref | * | 13.2.3.14 | data reference atom, declares source(s) of media in track |
| | | | | stbl | | * | 13.2.3.15 | sample table atom, container for the time/space map |
| | | | | | stts | * | 13.2.3.16.1 | (decoding) time-to-sample |
| | | | | | ctts | | 13.2.3.16.2 | composition time-to-sample table |
| | | | | | stss | | 13.2.3.21 | sync (key, I-frame) sample map |
| | | | | | stsd | * | 13.2.3.17 | sample descriptions (codec types, initialization etc.) |
| | | | | | stsz | * | 13.2.3.18 | sample sizes (framing) |
| | | | | | stsc | * | 13.2.3.19 | sample-to-chunk, partial data-offset information |
| | | | | | stco | * | 13.2.3.20 | chunk offset, partial data-offset information |
| | | | | | stsh | | 13.2.3.22 | shadow sync |
| | | | | | stdp | | 13.2.3.23 | degradation priority |
| mdat | | | | | | | 13.2.3.2 | media data container |
| free | | | | | | | 13.2.3.24 | free space |
| skip | | | | | | | 13.2.3.24 | free space |
| udta | | | | | | | 13.2.3.27 | user-data, copyright etc. |

ISO/IEC 14496-1:2002

21

13.2.3.16.1 Decoding Time to Sample Atom

| | | |
|---|---|---|
| Atom Type: | 'stts' | ISO/IEC 14496-1:2002 |
| Container: | Sample Table Atom ('stbl') | |
| Mandatory: | Yes | |
| Quantity: | Exactly one | |

This atom contains a compact version of a table that allows indexing from decoding time to sample number. Other tables give sample sizes and pointers, from the sample number. Each entry in the table gives the number of consecutive samples with the same time delta, and the delta of those samples. By adding the deltas a complete time-to-sample map may be built.

The Decoding Time to Sample Atom contains decode time delta's: $DT(n+1) = DT(n) + STTS(n)$ where $STTS(n)$ is the (uncompressed) table entry for sample n.

The sample entries are ordered by decoding time stamps; therefore the deltas are all non-negative.

The DT axis has a zero origin; $DT(i) = SUM$ (for $j=0$ to i-1 of delta (j)), and the sum of all deltas gives the length the media in the track (not mapped to the overall timescale, and not considering any edit list).

The Edit List Atom provides the initial CT value if it is non-empty (non-zero).

13.2.16.1.1 Syntax

```
aligned (8) class TimeToSamleAtom
    extends FullAtom ('stts', version = 0, 0) {
    unsigned  int(32) entry-count;
        int i;
    for (i= 0; i<entry-count; i++) {
        unsigned int(32) sample-count;
        int (32) sample-delta;
    }
}
```

For example with table 1.2, the entry would be:

| Sample count | Sample-delta |
|---|---|
| 14 | 10 |

13.2.3.16.1.2  Semantics

version - is an integer that specifies the version of this atom.
ttype - is 'stts' (for decoding times).
entry-count  -  is an integer that gives the number of entries in the following table.
sample-count  - is an integer that counts the number of consecutive samples that have the given duration.
sample-delta  - is an integer that gives the delta of these samples in the time-scale of the media.

# FIG 8 (prior art)

13.2.3.19 Sample to Chunk Atom

| | | |
|---|---|---|
| Atom Type: | 'stsc' | ISO/IEC 14496-1:2002 |
| Container: | Sample Table Atom ('stbl') | |
| Mandatory: | Yes | |
| Quantity: | Exactly one | |

Samples within the media data are grouped into chunks. Chunks may be of different sizes, and the samples within a chunk may have different sizes. By using this table you can find the chunk that contains a sample, its position, and the associated sample description.

The table is compactly coded. Each entry gives the index of the first chunk of a run of chunks with the same characteristics; by subtracting one entry here from the previous one, you can compute how many chunks are in this run. You can convert this to a sample count by multiplying by the appropriate samples-per-chunk.

13.2.3.19.1 Syntax

```
aligned (8) class TimeToChunkAtom
    extends FullAtom ('stsc', version = 0, 0) {
    unsigned int(32) entry-count;
    int i;
    for (i= 0; i<entry-count; i++) {
        unsigned int(32) first-chunk;
        unsigned int(32) samples-per-chunk;
        unsigned int(32) sample-description-index;
    }
}
```

13.2.3.19.2 Semantics

version - is an integer that specifies the version of this atom.
entry-count - is an integer that gives the number of entries in the following table.
first-chunk - is an integer that gives the index of the first chunk in this run of chunks that share the same samples-per-chunk and sample-description-index.
Samples-per-chunk - is an integer that gives the number of samples in each of these chunks.
Sample-description-index is an integer that gives the index of the sample entry that describes the samples in this chunk. The index ranges from 1 to the number of samples entries in the Sample Description Atom.

# FIG 9 (prior art)

13.2.3.20 Chunk Offset Atom

| | | |
|---|---|---|
| Atom Type: | 'stco' | ISO/IEC 14496-1:2002 |
| Container: | Sample Table Atom ('stbl') | |
| Mandatory: | Yes | |
| Quantity: | Exactly one | |

The chunk-offset table gives the index of each chunk into the containing file. There are two variants, permitting the use of 32-bit or 64-bit offsets. The latter is useful when managing very large presentations. At most one of these variants will occur in any single instance of sample table.

Note that offsets are file offsets not the offset into any atom within the file (e.g. a Media Data Atom). This permits referring to media data in files without any atom structure. It does also mean that care must be taken when constructing a self-contained mp4 file with its meta-data (Movie Atom) at the front, as the size of the Movie Atom will affect the chunk offsets to the media data.

13.2.3.20.1 Syntax

```
aligned (8) class ChunkOffsetAtom
    extends FullAtom ('stco', version = 0, 0) {
    unsigned int(32) entry-count;
    int i;
    for (i= 0; i<entry-count; i++) {
        unsigned int(32) chunk-offset;

    }
}

aligned (8) class ChunkLargeOffsetAtom
    extends FullAtom ('co64', version = 0, 0) {
    unsigned int(32) entry-count;
    int i;
    for (i= 0; i<entry-count; i++) {
        unsigned int(64) chunk-offset;

    }
}
```

13.2.3.20.2 Semantics

version - is an integer that specifies the version of this atom.
entry-count - is an integer that gives the number of entries in the following table.
Chunk-offset - is a 32 or 64 bit integer that gives the offset of the start of a chunk into its containing media stream (file).

# FIG 10 (prior art)

13.2.3.21 Sync Sample Atom

| | | |
|---|---|---|
| Atom Type: | 'stss' | ISO/IEC 14496-1:2002 |
| Container: | Sample Table Atom ('stbl') | |
| Mandatory: | Yes | |
| Quantity: | Zero or one | |

This atom provides a compact marking of the random access points within the stream. Precisely the samples named here would have the RandomAccessPoint flag set in their SL Packet headers. The table is arranged in strictly increasing order of sample number.

In this table is not present, every sample is a random access point.

13.2.3.21.1 Syntax

```
aligned (8) class SyncSampleAtom
   extends FullAtom ('stss', version = 0, 0) {
   unsigned  int(32) entry-count;
   int i;
   for (i= 0; i<entry-count; i++) {
      unsigned int(32)  sample-number;

   }
}
```

13.2.3.21.2 Semantics

version  - is an integer that specifies the version of this atom.
entry-count  - is an integer that gives the number of entries in the following table.
sample-number - gives the numbers of the samples that are random access points in the stream.

# FIG 11 (prior art)

13.2.3.18  Sample Size Atom

| | | |
|---|---|---|
| Atom Type: | 'stsz' | ISO/IEC 14496-1:2002 |
| Container: | Sample Table Atom ('stbl') | |
| Mandatory: | Yes | |
| Quantity: | Exactly one | |

This atom contains the sample count and table giving the size of each sample. This allows the media data itself to be unframed. The total number of samples in the media is always indicated in the sample count. If the default size is indicated, then no table follows.

13.2.3.18.1 Syntax

```
aligned (8) class SampleSizeAtom extends FullAtom ('stsz', version = 0, 0) {
   unsigned  int(32) sample-size;
   unsigned  int(32) sample-count;
   if (samle-size = = 0) {
      int i;
      for (i= 0; i<sample-count; i++) {
         unsigned int(32)  entry-size;

      }
   }
}
```

13.2.3.18.2 Semantics

version - is an integer that specifies the version of this atom.
sample-size is an integer specifying the default sample size. If all the samples are the same size, this field contains that size value. If this field is set to 0, then samples have different sizes, and those sizes are stored in the sample size table.
sample-count  -  is an integer that gives the number of entries in the following table.
entry - size  is integer specifying the size of a sample, indexed by its number.

# FIG 12 (prior art)

131 — | locate STSS |

preparaion for
random access

132 — | read and store STSS |

133 — | locate STCO, STTS |

134 — | read STCO, STTS in fragments |

135 — | discard STCO entries not relating to keyframes |

136 — | store sample number and file position for all kayframes | → | stored table |

130

137 — | read STTS in fragments |

138 — | drive absolute time info from diffential time info |

139 — | convert absolute time info in milliseconds and add to the stored table |

FIG 13

| | |
|---|---|
| 140 — receive time stamp for target sample | random access |
| 141 — access stored table for entry having next smaller time stamp | |
| 142 — read from (file position-additional offset) to retrieve navig. info record | |

# FIG 14

140 ⌐ target sample information

151 ⌐ access stored table from FIG 13 or STCO of metadata container for the target sample

sequential read

152 ⌐ jump to (file position-additional offset) and read redundant nawigation information record

153

retrieve presentation time from record

presentation time for media sample i

154

read media sample based on media sample size in record

155

decode media sample

decoded media sample i

157 ⌐

156

read navigation record for next media sample

FIG 15